(19) Europäisches Patentamt
European Patent Office
Office européen des brevets

(11) Publication number: **0 320 819 B1**

(12) **EUROPEAN PATENT SPECIFICATION**

(45) Date of publication of patent specification: **22.07.92**

(51) Int. Cl.[5]: **G03G 9/08**

(21) Application number: **88120628.8**

(22) Date of filing: **09.12.88**

(54) **Electrophotographic developer composition.**

(30) Priority: **14.12.87 JP 315527/87**

(43) Date of publication of application:
**21.06.89 Bulletin 89/25**

(45) Publication of the grant of the patent:
**22.07.92 Bulletin 92/30**

(84) Designated Contracting States:
**DE FR GB IT**

(56) References cited:
**EP-A- 0 234 899**

(73) Proprietor: **Kao Corporation**
**14-10, Nihonbashi Kayabacho 1-chome**
**Chuo-Ku Tokyo 103(JP)**

(72) Inventor: **Morimoto, Eizi**
**1334, Minato**
**Wakayamashi Wakayama(JP)**
Inventor: **Kawabe, Kuniyasu**
**1334, Minato**
**Wakayamashi Wakayama(JP)**

(74) Representative: **Patentanwälte Dr. Solf & Zapf**
**Zeppelinstrasse 53**
**W-8000 München 80(DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a developer composition used for developing an electrostatically charged image in an electrophotograph, electrostatic record, electrostatic print, etc.

As described in U.S. Patent Nos. 2,297,691 and 2,357,809, electrophotography comprises the steps of uniformly charging a photoconductive insulating layer, exposing the layer to light, eliminating the charge from the exposed part to form an electric latent image and making the latent image visible with a colored, charged fine powder called a toner (developing step); transferring the visible image thus formed onto a transfer material such as a transfer paper (transfer step); and permanently fixing it by heat, pressure or any other suitable fixing method (fixing step).

The toner must thus have functions necessitated not only in the developing step but also in the transfer step and the fixing step.

The toner is usually deteriorated after producing several thousands to scores of thousands of copies, because of the mechanical frictional force due to shearing and impact forces applied thereto during the mechanical operation in the developing apparatus. Although the deterioration of the toner can be prevented by using a tough resin having a high molecular weight which can withstand the mechanical frictional force, such a resin usually has a high softening point. Thus a non-contact fixing method such as oven fixing or radiant fixing with infrared rays cannot afford sufficient fixing because of poor thermal efficiency. Similarly a contact fixing method such as heat roller fixing, though widely employed by virtue of excellent thermal efficiency, requires a high temperature of the heat roller to attain sufficient fixing, thus causing troubles such as a damage to the fixing apparatus, curling of the paper and increase of energy consumption. In addition, when such a resin is used, the toner production efficiency is reduced because it has a poor pulverizability. Therefore, a binder resin having a high degree of polymerization or an excessively high softening point cannot be used. In the hot roller fixing method, a remarkably high thermal efficiency can be obtained, because the toner image side of a fixing sheet is brought into contact with the hot roller surface under pressure. This process is employed over a wide range of low-speed to high-speed fixing. However, a so-called offset phenomenon wherein, when the hot roller surface is brought into contact with the toner image side of the sheet, the toner adhered to the surface of the hot roller and is transferred to the transfer paper or the like. To prevent this phenomenon, the roller surface is made of a material having a high releasability, such as a fluorinated resin, and further a release agent such as a silicone oil is applied to the roller surface.

However, the application of the silicone oil causes troubles, because the size of the fixing apparatus is increased to increase the cost and the operation becomes complicated thereby.

Although a process for preventing the offset phenomenon by widening the molecular weight distribution of the binder resin was proposed as described in Japanese Patent Publication No. 6895/1980 and Japanese Patent Laid-Open No. 98202/1981, usually the degree of polymerization of the resin is high and in such a case a high fixing temperature is required.

Although improved processes for preventing the offset phenomenon by asymmetrizing or crosslinking the resin were disclosed in Japanese Patent Publication No. 493/1982 and Japanese Patent Laid-Open Nos. 44836/1975 and 37353/1982, the problem of the fixing temperature has not been solved yet.

Since the minimum fixing temperature lies between the temperature of the low-temperature offset and that of the high-temperature offset, a practicable temperature range in the fixing step is from the minimum fixing temperature to the temperature of the high-temperature offset. Therefore, the fixing temperature can be lowered and the practicable temperature range can be widened by lowering the minimum fixing temperature as far as possible and also by elevating the temperature of the high-temperature offset. In such a way, the energy can be saved, fixing can be conducted at a high speed and the curling of the paper can be prevented. In addition, double copy can be effected without any trouble. Thus, advantages such as provision of an intelligent copying machine, an increase in the accuracy of the temperature control of a fixing apparatus and widening of the tolerance are obtained.

Under these circumstances, resins and toners having excellent fixability and offset resistance are demanded.

It is known from Japanese Patent Laid-Open Nos. 65232/1974, 28840/1975 and 81342/1975 that when a styrene binder resin is used for satisfying the above-described requirements, a paraffin wax, a low-molecular weight polyolefin or the like is used as an offset inhibitor. However, it was also found that no intended effect could be obtained when the amount thereof was insufficient and that the developer was rapidly deteriorated when the amount was too large.

Although a polyester resin has inherently excellent fixability and can be sufficiently fixed even by the non-contact fixing method as described in U.S. Patent No. 3,590,000, it is liable to cause the offset phenomenon so that it is unsuitable for use in the heat roller fixing method. As described in Japanese

Patent Laid-Open Nos. 44836/1975, 37353/1982 and 109875/1982, a polyester resin comprising a polybasic carboxylic acid and, therefore, having an improved offset resistance still has problems that the offset resistance does not suffice for the practical use yet or that even when it suffices, the inherent low-temperature fixability of the polyester resin is often sacrificed.

EP-A-0234899 discloses an electrophotographic developer composition comprising a binder resin, a colorant and other additives, wherein the binder resin mainly comprises a polyester resin formed by copolycondensing:

- a diol component of the formula:

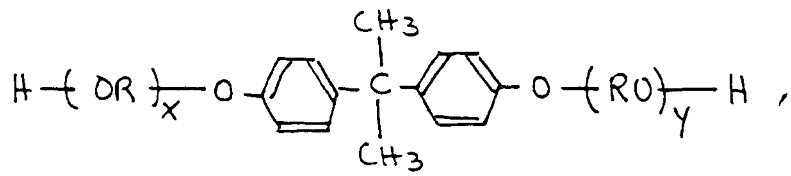

where R represents an ethylene or propylene group and x and y each represent an integer of at least 1, the mean value of x + y being 2 to 7;

- a diol component of the formula:

$$H-O-(CH_2)_n-O-H ,$$

where n represents an integer of 2 to 6;

- a dibasic carboxylic acid, an anhydride thereof or a lower alkyl ester thereof , e.g. terephthalic acid;
- a tribasic or higher carboxylic acid, an anhydride thereof or a lower alkyl ester thereof; and

whereby the binder resin has a softening point of 106 to 160 ° C and a glass transition point of 50 to 80 ° C; and that the composition contains a charge controlling agent.

Furthermore, the electrophotographic developer composition disclosed in the above mentioned document may comprise a diol having the formula:

$$HO-(R'-O)_n-H$$

(in which R' is an alkyl having 2 to 4 carbon atoms and n is an integer of 2 to 4), e.g. diethylene glycol, triethylene glycol.

When a polyester resin of which the diol component mainly comprises an alkylene oxide adduct of bisphenol A is used, a negatively chargeable toner can be obtained without using any charge controller, because the resin per se is capable of negative triboelectrification. However, a positively chargeable toner, which is acquiring an increasing demand with the spread of organic photoconductors, can be obtained only through an expedient comprising the use of a fluorinated coating agent for the carrier of a two-component toner even when a positively electrifying charge controller is added.

The present invention has been completed after investigations made for the purpose of satisfying the above-described requirements. An object of the present invention is to provide a developer fixable at a low fixing temperature by the heat roller fixing method while inhibiting offset without application of any offset inhibitor solution.

Another object of the present invention is to provide a developer free from blocking and having a long service life (i.e. which is not easily deteriorated).

A still another object of the present invention is to provide easily pulverizable resin and toner.

A further object of the present invention is to provide a positively or negatively chargeable toner easily by the addition of at least one charge controller.

The present invention provides an electrophotographic developer composition comprising a binder resin a colorant and, optionally, other additives, the binder resin comprising mainly a polyester resin formed by copolycondensing at least:

(a) a diol component of the formula:

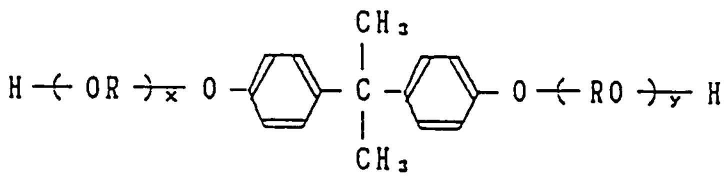

wherein R represents an ethylene or propylene group, and x and y each represent an integer of at least 1, the mean value of x + y being 2 to 7;

(b) a diol component of the formula:

$$H-O-(CH_2)_n-O-H$$

wherein n represents an integer of 2 to 6;

(c) a dibasic carboxylic acid, an anhydride thereof or a lower alkyl ester thereof; and

(d) a tribasic or higher carboxylic acid, an anhydride thereof or a lower alkyl ester thereof;

**characterized** in that

- the amount of diol component (a) is less than 10 mole %;
- the amount of diol component (b) is in the range of 10 to less than 25 mole %;
- the amount of component (d) is in the range of 2.5 to less than 15 mole %;
  all amounts being based on the sum of all components;
- and in that the composition contains at least one charge controller.

The polyester may further comprise a diol (e) having the formula: HO-(R'-O)$_n$-H in which R' is an alkyl having 2 to 4 carbon atoms and n is an integer of 2 to 4.

The polyester moiety of the resin used as the main component of the binder resin of the present invention is formed by the polycondensation of an alcohol with a carboxylic acid, carboxylic ester or carboxylic acid anhydride.

Among the alcohol components, the diol component (a) includes, for example, polyoxypropylene(2.2)-2,2-bis(4-hydroxyphenyl)propane, polyoxypropylene(3.3)-2,2-bis(4-hydroxyphenyl)propane, polyoxyethylene-(2.0)-2,2-bis(4-hydroxyphenyl)propane, polyoxypropylene(2.0)-polyoxyethylene(2.0)-2,2-bis(4-hydroxyphenyl)propane and polyoxypropylene(6)-2,2-bis(4-hydroxyphenyl)propane.

The diol component (a) is used in an amount of less than 10 mole % based on the total components. When its amount exceeds 10 mole %, the negative chargeability of the polyester resin is increased to make the formation of a positively chargeable toner difficult unfavorably.

The diol component (b) includes ethylene glycol, 1,3-propylene glycol, 1,4-butanediol, 1,5-pentanediol and 1,6-hexanediol. Among them, ethylene glycol, 1,3-propylene glycol and 1,4-butanediol are preferred.

The diol component (b) is used in an amount of at least 10 mole % but less than 25 mole %, based on the total components. When its amount is less than 10 mole %, the minimum fixing temperature of the toner is elevated and, on the contrary, when it is 25 mole % or more, the resin becomes crystalline unfavorably as described in Japanese Patent Publication No. 493/1982.

Further, if necessary, other diols such as diethylene glycol, triethylene glycol, 1,2-propylene glycol, neopentyl glycol and 1,4-butenediol; and bisphenol A, hydrogenated bisphenol A and other dihydric alcohols can be incorporated therein.

The carboxylic acid component (c) in the present invention includes, for example, maleic, fumaric, citraconic, itaconic, glutaconic, phthalic, isophthalic, terephthalic, cyclohexanedicarboxylic, succinic, adipic, sebacic, azelaic and malonic acids; alkenyl-and alkylsuccinic acids such as n-dodecenyl- and n-dodecylsuccinic acids; anhydrides and lower alkyl esters of these acids; and other dibasic carboxylic acids.

Among them, terephthalic acid and lower alkyl esters thereof are particularly preferred.

The tribasic or higher carboxylic acid or a derivative thereof (d) in the present invention is a desirable component which inhibits the offset phenomenon. When it is used only in an insufficient amount, no intended effect can be obtained and the pulverizability of the polyester resin and the toner are reduced. When, on the contrary, its amount is excessive, not only the control of the reaction is difficult and a polyester resin having stabilized performance cannot be easily obtained but also the minimum fixing temperature is elevated unfavorably. Therefore, the amount of the tribasic or higher carboxylic acid or a

derivative thereof (d) is at least 2.5 mole % but less than 15 mole % based on the total components. The tribasic or higher carboxylic acids and derivatives thereof include, for example, 1,2,4-benzenetricarboxylic acid, 2,5,7-naphthalenetricarboxylic acid, 1,2,4-naphthalenetricarboxylic acid, 1,2,4-butanetricarboxylic acid, 1,2,5-hexanetricarboxylic acid, 1,3-dicarboxyl-2-methyl-2-methylenecarboxypropane, tetra-(methylenecarboxyl)methane, 1,2,7,8-octanetetracarboxylic acid, Empol trimer acid and anhydrides and lower alkyl esters of them as well as other tribasic and higher carboxylic acids.

The diol (e) has the formula: $HO-(R'-O)_n-H$ in which $R'$ is an alkyl having 2 to 4 carbon atoms and n is an integer of 2 to 4.

The diol (e) includes diethyleneglycol, triethyleneglycol, tetraethylene glycol, dipropyleneglycol, tripropyleneglycol, tetrapropyleneglycol, di-tetramethyleneglycol, tri-tetramethyleneglycol and tetra-tetramethyleneglycol. The developer composition should contain 1.5 to 10 mole percent based on the sum of all components of the diol (e). An amount more than 10 mole percent would result in blocking of toner.

The binder resin used in the present invention has preferably a softening point of 106 to 160°C and a glass transition temperature of 50 to 80°C. When the softening point is lower than 106°C, no sufficient offset-free region can be obtained and, on the contrary, when it exceeds 160°C, the minimum fixing temperature is elevated unfavorably. Further when the glass transition temperature of the binder resin is lower than 50°C, the storability after formation of the toner is poor and, on the contrary, when it exceeds 80°C, an adverse effect is exerted on the fixability unfavorably.

The polyester resin used in the present invention can be produced by polycondensing a polybasic carboxylic acid with a polyol component at 180 to 250°C in an inert gas atmosphere. To accelerate the reaction, an ordinary esterification catalyst such as zinc oxide, stannous oxide, dibutyltin oxide or dibutyltin dilaurate can be used. The reaction can be accelerated also by conducting it under reduced pressure.

Among the charge controllers used in the present invention, positive charge controllers include, for example, Nigrosine dyes such as Nigrosine Base EX, Oil Black BS, Oil Black SO, Bontron N-01 and Bontron N-11 (products of Orient Kagaku Co.); triphenylmethane dyes having a tertiary amine as a side chain; quaternary ammonium salts such as Bontron P-51 (a product of Orient Kagaku Co.) and cetyltrimethylammonium bromide; and polyamine resins such as AFP-B (a product of Orient Kagaku Co.).

The negative charge controllers include, for example, metal-containing azo dyes such as Varifast Black 3804, Bontron S-31, Bontron S-32, Bontron S-34 and Bontron S-36 (products of Orient Kagaku Co.) and Aizen Spilon Black TVH (a product of Hodogaya Chemical Co., Ltd.); copper phthalocyanine dyes; and metal complexes of alkyl derivatives of salicylic acid, such as Bontron E-82, Bontron E-84 and Bontron E-85 (products of Orient Kagaku Co.).

The charge controller(s) is (are) contained in an amount of 0.1 to 8.0 wt.%, preferably 0.2 to 5.0 wt.%, based on the binder resin.

The polyester resin is used as the main component of the binder resin together with at least one charge controller to obtain the toner according to the present invention. Further other resins such as styrene resin or styrene/acrylic resin having a number-average molecular weight of 11,000 or less can also be used in an amount of at most 30 wt.% based on the binder resin in order to further improve the pulverizability in the toner formation step. In the toner formation step, a colorant and, if desired, a magnetic substance are added. In addition, modifiers such as a wax as an offset inhibitor and hydrophobic silica as a fluidity improver are also added. However, when the polyester resin of the present invention is used as the binder resin, the modifiers are unnecessary or, even when they are used, only a small amount of them will suffice.

The colorants used in the present invention include, for example, carbon blacks prepared by thermal black process, acetylene black process, channel black process or lamp black process, Phthalocyanine Blue, Permanent Brown FG, Brilliant Fast Scarlet, Pigment Green B, Rhodamine B Base, Solvent Red 49, Solvent Red 146, Solvent Blue 35 and mixtures of them. Usually, the colorant is used in an amount of about 1 to 15 parts by weight for 100 parts by weight of the binder resin.

The polyester resin and at least one charge regulator as the indispensable components of the present invention are mixed with the colorant and, if necessary, the modifiers to form a homogeneous dispersion. The dispersion is melt-blended, cooled, pulverized and classified by known methods to obtain a toner having an average particle diameter of 5 to 15 μm. The toner is mixed with a magnetic powder such as iron oxide carrier, spherical iron oxide carrier or ferrite carrier coated with a resin or the like to form a dry two-component developer.

The magnetic substances usable for the production of the magnetic toner from the binder resin of the present invention include powders of ferromagnetic metals such as iron, cobalt and nickel; alloys comprising a ferromagnetic element, such as ferrite, hematite and magnetite; and compounds of them. The magnetic substance is used in the form of fine powder having an average particle diameter of 0.1 to 1 μm. It is dispersed in an amount of about 40 to 70 parts by weight for 100 parts by weight of the binder resin.

[Examples]

The following Production Examples for the binder resin and the Examples of the present invention will further illustrate the present invention, which by no means limit the invention.

In the following Examples, the ratios are given by weight.

Production Example 1

164.9 g of polyoxypropylene(2.2)-2,2-bis(4-hydroxyphenyl)propane, 86.5 g of ethylene glycol, 84.4 g of 1,2-propylene glycol, 430.7 g of dimethyl terephthalate, 106.6 g of 1,2,4-benzenetricarboxylic anhydride (trimellitic anhydride) and 1.2 g of dibutyltin oxide were placed in a 2-ℓ glass four-necked flask. The flask was provided with a thermometer, a stainless steel stirring rod, a reflux condenser and a nitrogen gas inlet tube. The mixture was stirred at 170 ° C for 5 h and then at 220 ° C in a nitrogen stream in a mantle heater to conduct the reaction. The degree of polymerization was traced by measuring the softening point according to ASTM E 28-51T. When the softening point reached 130 ° C, the reaction was terminated.

The resulting resin was a light yellow solid. The glass transition temperature determined with DSC (differential scanning calorimeter) is shown in Table 1. The resin thus obtained will be referred to as Binder resin (1).

Production Examples 2 to 9

The same procedure as that of Production Example 1 was repeated except that starting materials shown in Table 1 were used to produce Binder resins (2) to (9).

The physical properties of the resins are shown in Table 1.

Table 1 Binder resins and constituent monomers

| | | Binder resin (1) | Binder resin (2) | Binder resin (3) | Binder resin (4) | Binder resin (5) | Binder resin (6) | Binder resin (7) | Binder resin (8) | Binder resin (9) |
|---|---|---|---|---|---|---|---|---|---|---|
| Constituting monomer (molar %) | Polyoxypropylene(2.2)-2,2-bis-(4-hydroxyphenyl)propane | 8 | – | – | 8 | 8 | 12 | – | 8 | 8 |
| | Ethylene glycol | 24 | – | 20 | 24 | 24 | 20 | 8 | 24 | 24 |
| | 1,3-Propylene glycol | – | 23 | – | – | – | – | – | – | – |
| | 1,4-Butanediol | – | – | 3 | – | – | – | – | – | – |
| | 1,2-Propylene glycol | 19 | 28 | 26 | 19 | 19 | 19 | 43 | 19 | 19 |
| | Diethylene glycol | – | – | 2 | – | – | – | – | – | – |
| | Dimethyl terephthalate | 39 | 39 | 39 | 39 | 39 | 39 | 39 | 47 | 31 |
| | Trimellitic anhydride | 10 | 10 | 10 | 10 | 10 | 10 | 10 | 2 | 18 |
| Physical properties of resin | Softening point determined by ring and ball method (°C) | 130 | 130 | 130 | 103 | 165 | 130 | 130 | 130 | 130 |
| | Glass transition temperature (°C) | 63 | 60 | 61 | 49 | 68 | 65 | 68 | 64 | 62 |

Examples 1 to 6, Referential Examples 1 and 2 and Comparative Examples 1 to 5

The following materials were mixed together by means of a Henschel mixer. The mixture was melt-kneaded with a twin-screw extruder, cooled, pulverized and classified in an ordinary manner to obtain toners

having an average particle diameter of 11 μm.

<Compositions>

Example 1

| | |
|---|---|
| Binder resin (1) | 90 parts |
| Carbon Black #44 (a product of Mitsubishi Chemical Industries, Ltd.) | 7 |
| Charge controller (negatively chargeable) "Aizen Spilon Black TVH" (a product of Hodogaya Chemical Co., Ltd.) | 2 |

Example 2

| | |
|---|---|
| Binder resin (2) | 90 parts |
| Carbon Black #44 | 7 |
| Charge controller (negatively chargeable) "Bontron S-34" (a product of Orient Kagaku Co.) | 2 |

Example 3

| | |
|---|---|
| Binder resin (3) | 90 parts |
| Carbon Black #44 | 7 |
| Charge controller (negatively chargeable) "Aizen Spilon Black TVH" | 2 |

Example 4

| | |
|---|---|
| Binder resin (1) | 90 parts |
| Carbon Black #44 | 7 |
| Charge controller (positively chargeable) "Bontron N-01" (a product of Orient Kagaku Co.) | 2 |

Example 5

| | |
|---|---|
| Binder resin (2) | 90 parts |
| Carbon Black #44 | 7 |
| Charge controller (positively chargeable) "Bontron N-11" (a product of Orient Kagaku Co.) | 2 |

Example 6

| | |
|---|---|
| Binder resin (3) | 90 parts |
| Carbon Black #44 | 7 |
| Charge regulator (positively electrifying) "Bontron N-01" | 2 |

Referential Example 1

| | |
|---|---|
| Binder resin (4) | 90 parts |
| Carbon Black #44 | 7 |
| Charge controller (negatively chargeable) "Aizen Spilon Black TVH" | 2 |

Referential Example 2

| | |
|---|---|
| Binder resin (5) | 90 parts |
| Carbon Black #44 | 7 |
| Charge controller (negatively chargeable) "Aizen Spilon Black TVH" | 2 |

Comparative Example 1

| | |
|---|---|
| Binder resin (1) | 90 parts |
| Carbon Black #44 | 7 |

Comparative Example 2

| | |
|---|---|
| Binder resin (6) | 90 parts |
| Carbon Black #44 | 7 |
| Charge regulator (positively electrifying) "Bontron N-01" | 2 |

Comparative Example 3

| | |
|---|---|
| Binder resin (7) | 90 parts |
| Carbon black #44 | 7 |
| Charge controller (negatively chargeable) "Bontron S-34" | 2 |

Comparative Example 4

| | |
|---|---|
| Binder resin (8) | 90 parts |
| Carbon black #44 | 7 |
| Charge controller (negatively chargeable) "Bontron S-34" | 2 |

Comparative Examples 5

| | |
|---|---|
| Binder resin (9) | 90 parts |
| Carbon Black #44 | 7 |
| Charge controller (negatively chargeable) "Bontron S-34" | 2 |

The toners produced in the above Examples 1 to 6 will be referred to as "Toner 1" to "Toner 6", respectively, those produced in Referential Examples 1 and 2 as "Referential Toner 1" and Referential Toner 2", respectively, and those produced in Comparative Examples 1 to 5 as "Comparative Toner 1" to "Comparative Toner 5", respectively.

39 parts of each of the toners was mixed with 1261 parts of resin-coated iron powder to form a developer. An image was formed with the developer using a commercially available electrophotographic copying machine. In this process, the photoconductor used was amorphous selenium for the Toners 1, 2 and 3, Referential Toners 1 and 2 and Comparative Toners 1, 3, 4 and 5 and an organic photoconductor for the Toners 4, 5 and 6 and Comparative Toner 2, the rotation rate of the fixing roller was 255 mm/sec, the temperature of the heat roller of the fixing apparatus was variable and the oil applicator was removed from the apparatus.

The image-fixing capacity and the offset phenomenon were examined while the fixing temperature was controlled at 120 to 220 °C to obtain the results shown in Table 2.

The minimum fixing temperature was determined as follows: the image fixed by passing through the fixing apparatus was rubbed by reciprocating a typewriter eraser containing sand and having the bottom size of 15 mm x 7.5 mm five times under a load of 500 g. The optical reflection density thereof was determined with a reflection densitometer (a product of Macbeth Co.) before and after the rubbing. The minimum fixing temperature herein refers to the temperature of the fixing roller at which the fixing rate defined as follows exceeds 70%:

$$\text{Fixing rate} = \frac{\text{Image density after rubbing}}{\text{Image density before rubbing}} \times 100$$

The storage stability was determined in terms of the degree of the aggregation caused after leaving each toner to stand at 50 ° C at a relative humidity of 40% for 24 h. The results are also shown in Table 2.

Table 2

| Toner | Image density | Minimum fixing temperature (°C) | Low-temp. offset inhibiting temp. (°C) | High-temp. offset inhibiting temp. (°C) | Storage stability | Grindability of resin* |
|---|---|---|---|---|---|---|
| Toner 1 | 1.36 | 135 | 130 | 220< | good | ◎ |
| " 2 | 1.35 | 132 | 130 | 220< | 〃 | ◎ |
| " 3 | 1.35 | 133 | 130 | 220< | 〃 | ◎ |
| Ref. toner 1 | 1.33 | 124 | 190 | 200 | poor | ◎ |
| " 2 | 1.35 | 168 | 130 | 220< | good | ○ |
| Comp. toner 1 | 1.50 | 135 | 130 | 220< | 〃 | ◎ |
| " 3 | 1.33 | 170 | 130 | 220< | 〃 | ◎ |
| " 4 | 1.34 | 140 | 140 | 200 | 〃 | × |
| " 5 | 1.35 | 160 | 130 | 220< | 〃 | ◎ |

Note)

* Pulverizability of resin:

The pulverizability of the resin was determined by a simplified pulverization test. Namely, the resin pulverized by an ordinary method was passed through sieves and powders which passed through a 16-mesh sieve but did not passed through a 20-mesh sieve were collected. 30.00 g of the powders were weighed out accurately, pulverized with a coffee mill (HR-2170 type of Phlips Co.) for 15 sec and then passed through a 32-mesh sieve. The amount A (g) of the resin powders which remained on the sieve was weighed accurately. The remaining rate was determined according to the following formula:

$$\text{Remaining rate (\%)} = \frac{\text{A (g)}}{\text{Weight (30.00 g) of the resin before pulverization with coffee mill}} \times 100$$

This procedure was repeated three times and the average remaining rate was calculated. The results are shown on the basis of the following criteria:

Average remaining rate

| | |
|---|---|
| ◎: | 0 to 15.0% |
| O : | 15.1 to 30.0% |
| Δ : | 30.1 to 45.0% |
| X : | 45.1 to 100% |

It is apparent from Table 2 that the Toners 1 to 3 of the present invention have a low minimum fixing temperature, a wide offset-free region, an excellent storage stability, excellent resin pulverizability and excellent toner pulverizability. With the Comparative Toner 1, the initial image density was high due to a small quantity of charge and considerable background was caused, though the minimum fixing temperature was low. With the Referential Toner 1, the offset-free region was narrow and the storage stability was poor, though the minimum fixing temperature was remarkably lowered. With the Referential Toner 2 and the Comparative Toners 3 and 5, the minimum fixing temperature was high. With the Comparative Toner 4, the offset-free region was not wide and the pulverizability of the resin and, therefore, that of the toner were poor. The Binder resin (9) used for the production of the Comparative Toner 5 had a poor production stability.

The toners 4, 5 and 6 positively charged with positive electrons, were each found to provide an excellent visible image in respect to fixation, storage stability and pulverization, in the same way as shown in the toners 1, 2 and 3. The comparative toner 2 was found to cause considerable background.

Production Example 10

A resin (10) being a light yellow solid and having a glass transition point as listed in Table 3 was obtained in the same way as shown in Production Example 1, except for using 164.9 g of polyoxypropylene(2,2)-2,2-bis(4-hydroxyphenyl)propane, 72.0 g of ethyleneglycol, 84.4 g of 1,2-propyleneglycol, 24.6 g of diethyleneglycol, 430.7 g of dimethyl terephthalate, 106.6 g of trimellitic anhydride and 2 g of dibutyltin oxide.

Production Examples 11 to 18

Resins (11) to (18) were obtained in the same way as shown in Production Example 9, except for using starting material as listed in Table 3.

Examples 7 to 12 and Comparative Examples 6 to 12

In each test, a composition comprising 90 parts by weight of a binder resin, 7 parts by weight of carbon black #44 and 2 parts by weight of a charge controller was treated in the same way as shown in Example 1 to obtain toner. Resins and charge controllers used are listed in Table 4.

Table 3

| | binder resin | | | | | | | | |
|---|---|---|---|---|---|---|---|---|---|
| monomer (mole %) | 10 | 11 | 12 | 13 | 14 | 15 | 16 | 17 | 18 |
| polyoxypropylene (2.2)-2,2-bis-(4-hydroxyphenyl)propane | 8 | - | - | 8 | 8 | 12 | - | 8 | 8 |
| ethylene glycol | 20 | - | 21 | 20 | 20 | 20 | 8 | 20 | 20 |
| 1,2-propylene glycol | 19 | 15 | 28 | 19 | 19 | 19 | 43 | 19 | 19 |
| 1,3-propylene glycol | - | 23 | - | - | - | - | - | - | - |
| diethylene glycol | 4 | - | 2 | 4 | 4 | - | - | 4 | 4 |
| dipropylene glycol | - | 3 | - | - | - | - | - | - | - |
| neopentyl glycol | - | 10 | - | - | - | - | - | - | - |
| terephthalic acid | - | - | 39 | - | - | - | - | - | - |
| dimethyl terephthalate | 39 | 39 | - | 39 | 39 | 39 | 39 | 47 | 31 |
| trimellitic anhydride | 10 | 10 | 10 | 10 | 10 | 10 | 10 | 2 | 18 |
| property | | | | | | | | | |
| softening point (°C) | 130 | 130 | 130 | 103 | 165 | 130 | 130 | 130 | 130 |
| glass transition temp. (°C) | 61 | 63 | 62 | 49 | 68 | 65 | 68 | 62 | 60 |

Table 4

| | binder resin | charge controller |
|---|---|---|
| Example 7 | resin (10) | Aizen Spilon Black TVH |
| 8 | resin (11) | Bontron S-34 |
| 9 | resin (12) | Aizen Spilon Black TVH |
| 10 | resin (10) | Bontron N-01 |
| 11 | resin (11) | Bontron N-11 |
| 12 | resin (12) | Bontron N-01 |
| Comparative Example 6 | resin (10) | no |
| Referential Example 3 | resin (13) | Bontron N-01 |
| Referential Example 4 | resin (14) | Aizen Spilon Black TVH |
| Comparative Example 7 | resin (15) | Bontron N-01 |
| 8 | resin (16) | Bontron S-34 |
| 9 | resin (17) | Bontron S-34 |
| 10 | resin (18) | Bontron S-34 |

Toners 7 to 12 and Comparative toners 6 to 10 were respectively obtained. Each toner was examined in the same way as shown in Example 1, except that a photoconductor of amorphous selenium was used for the toners 7, 8 and 9 and referential toners 3 and 4 and comparative toners 6, 8, 9 and 10 and organic photoconductor was used for the toners 10, 11 and 12 and the comparative toner 7. Results are shown in Table 5. The comparative toners 6 and 7 were found to cause a considerable background in the obtained image, that is, a considerable fogging.

Table 5

| Toner | Image density | Minimum fixing temperature (°C) | Low-temp. offset inhibiting temp. (°C) | High-temp. offset inhibiting temp. (°C) | Storage stability | Grindability of resin* |
|---|---|---|---|---|---|---|
| toner 7 | 1.36 | 131 | 130 | higher than 220 | good | ◎ |
| 8 | 1.35 | 131 | 130 | higher than 220 | good | ◎ |
| 9 | 1.35 | 131 | 130 | higher than 220 | good | ◎ |
| 10 | 1.36 | 131 | 130 | higher than 220 | good | ◎ |
| 11 | 1.37 | 131 | 130 | higher than 220 | good | ◎ |
| 12 | 1.37 | 131 | 130 | higher than 220 | good | ◎ |
| comparative toner 6 | 1.50 | 135 | 130 | higher than 220 | good | ◎ |
| referential toner 3 | 1.33 | 124 | 190 | 200 | poor | ◎ |
| referential toner 4 | 1.35 | 168 | 130 | higher than 220 | good | o |
| comparative toner 8 | 1.33 | 170 | 130 | higher than 220 | good | ◎ |
| 9 | 1.34 | 145 | 140 | 200 | good | x |
| 10 | 1.35 | 160 | 130 | higher than 220 | good | ◎ |

## Claims

1. An electrophotographic developer composition comprising a binder resin, a colorant and, optionally, other additives, the binder resin comprising mainly a polyester resin formed by copolycondensing at least:

(a) a diol component of the formula:

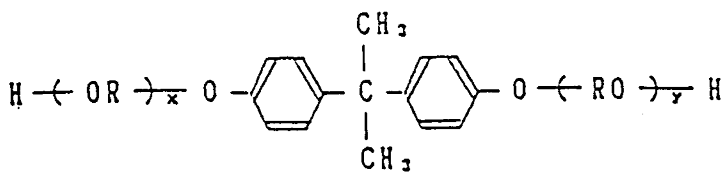

wherein R represents an ethylene or propylene group, and x and y each represent an integer of at least 1, the mean value of x + y being 2 to 7;
(b) a diol component of the formula:

$$H-O-(CH_2)_n-O-H$$

wherein n represents an integer of 2 to 6;
(c) a dibasic carboxylic acid, an anhydrlde thereof or a lower alkyl ester thereof; and
(d) a tribasic or higher carboxylic acid, an anhydride thereof or a lower alkyl ester thereof;

**characterized** in that

- the amount of diol component (a) is less than 10 mole %;
- the amount of diol component (b) is in the range of 10 to less than 25 mole %;
- the amount of component (d) is in the range of 2.5 to less than 15 mole %; all amounts being based on the sum of all components;
- and in that the composition contains at least one charge controller.

**2.** The electrophotographic developer composition according to Claim 1 characterized in that the dibasic carboxylic acid mainly comprises terephthalic acid or a lower alkyl ester thereof.

**3.** The electrophotographic developer composition according to Claim 1 characterized in that the binder resin has a softening point of 106 to 160 ° C and a glass transition temperature of 50 to 80 ° C.

**4.** The electrophotographic developer composition according to Claim 1, which further comprises (e) 1.5 to less than 10 mole percent, based on the sum of all components, of a diol having the formula:

$HO-(R'-O)_n-H$,

in which R' is an alkyl having 2 to 4 carbon atoms and n is an integer of 2 to 4.

**Revendications**

**1.** Composition de développement électrophotographique comprenant un liant résineux, un colorant et éventuellement d'autres additifs, le liant résineux consistant essentiellement en une résine polyester formée par copolycondensation d'au moins:
(a) un composant diol de formule:

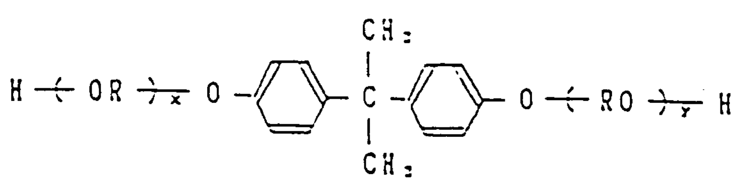

dans laquelle R représente un groupe éthylène ou propylène, et x et y représentent chacun un nombre entier valant au moins 1, la valeur moyenne de la somme x + y valant de 2 à 7,

(b) un composant diol de formule:

$H-O-(-CH_2-)_n-O-H$,

dans laquelle n représente un nombre entier valant de 2 à 6,
(c) un acide dicarboxylique, un anhydride ou un ester alkylique (inférieur) d'acide dicarboxylique,
(d) un acide tricarboxylique ou un acide à plus de trois fonctions acide carboxylique, un anhydride ou un ester alkylique (inférieur) de cet acide,

caractérisée en ce que

- la proportion de composant diol (a) est inférieure à 10 % en moles,
- la proportion de composant diol (b) vaut de 10 à moins de 25 % en moles,
- la proportion de composant (d) vaut de 2,5 à moins de 15 % en moles, toutes ces proportions étant calculées par rapport à la somme de tous les composants,
  et en ce que la composition contient au moins un régulateur de charge.

**2.** Composition de développement électrophotographique selon la revendication 1, caractérisée en ce que l'acide dicarboxylique comprend surtout l'acide téréphtalique ou un ester alkylique inférieur de cet acide.

**3.** Composition de développement électrophotographique selon la revendication 1, caractérisée en ce que le liant résineux présente un point de ramollissement de 106 à 160 °C et une température de transition vitreuse de 50 à 80 °C.

**4.** Composition de développement électrophotographique selon la revendication 1, qui comprend en outre (e) de 1,5 à moins de 10 % en moles, par rapport à la somme de tous les composants, d'un diol de formule:

$HO-(-R'-O-)_n-H$,

dans laquelle R' est un groupe alkyle en $C_{2-4}$ et n est un nombre entier valant de 2 à 4.

### Patentansprüche

**1.** Elektrophotographische Entwickler-Zusammensetzung enthaltend ein Bindeharz, ein Farbmittel und wahlweise andere Zusatzstoffe, wobei das Bindeharz vorwiegend ein Polyesterharz umfaßt, das gebildet wird durch Copolykondensation von mindestens:
(a) einer Diolkomponenten der Formel:

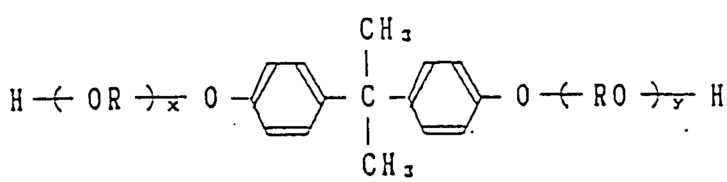

in der R eine Ethylen- oder Propylengruppe darstellt, und X und Y jeweils eine ganze Zahl von mindestens 1 darstellen, wobei der Durchschnittswert von X + Y 2 bis 7 beträgt;
(b) einer Diolkomponenten der Formel:

$$H-O-(-CH_2-)_n-O-H$$

in der n eine ganz Zahl von 2 bis 6 darstellt;
(c) einer dibasischen Carbonsäure, einem Anhydrid davon oder einem niedrigeren Alkylester davon; und

(d) einer tri- oder höher-basischen Carbonsäure, eines Anhydrids davon oder eines niedrigeren Alkylesters davon;

dadurch gekennzeichnet, daß

- die Menge der Diolkomponente (a) weniger als 10 Mol% beträgt;
- die Menge der Diolkomponente (b) im Bereich von 10 bis weniger als 25 Mol% liegt;
- die Menge der Komponente (d) im Bereich von 2,5 bis weniger als 15 Mol% liegt; wobei alle Mengen auf die Summe aller Komponenten bezogen sind;
- und daß die Zusammensetzung mindestens einen Ladungsregler enthält.

**2.** Elektrophotographische Entwickler-Zusammensetzung nach A1, dadurch gekennzeichnet, daß die dibasische Carbonsäure vorwiegend Terephthalsäure oder einen niedrigeren Alkylester davon enthält.

**3.** Elektrophotographische Entwickler-Zusammensetzung nach A1, dadurch gekennzeichnet, daß das Bindeharz einen Erweichungspunkt von 106 bis 160° C und eine Glasübergangstemperatur von 50 bis 80° C aufweist.

**4.** Elektrophotographische Entwickler-Zusammensetzung nach A1, welches zusätzlich (e) 1,5 bis weniger als 10 Mol%, bezogen auf die Summe aller Komponenten, eines Diols der Formel

HO-(R'-O)n-H,

in der R' ein Alky ist, das 2 bis 4 Kohlenstoffatome hat, und n eine ganz Zahl von 2 bis 4 ist, enthält.